# EUROPÄISCHE PATENTSCHRIFT

(11) **EP 2 283 320 B1**
(45) Veröffentlichungstag und Bekanntmachung des Hinweises auf die Patenterteilung: **11.11.2015**
(21) Anmeldenummer: 09753596.7
(22) Anmeldetag: 20.04.2009
(51) Int. Cl.: G01C 21/36, G06F 3/048

(54) **ANZEIGEVERFAHREN FÜR EIN ANZEIGESYSTEM, ANZEIGESYSTEM UND BEDIENVERFAHREN FÜR EIN NAVIGATIONSSYSTEM EINES FAHRZEUGS**
DISPLAY METHOD FOR A DISPLAY SYSTEM, DISPLAY SYSTEM AND OPERATING METHOD FOR A NAVIGATION SYSTEM IN A VEHICLE
PROCÉDÉ D AFFICHAGE POUR UN SYSTÈME D AFFICHAGE, SYSTÈME D AFFICHAGE ET PROCÉDÉ DE COMMANDE POUR UN SYSTÈME DE NAVIGATION D UN VÉHICULE

(30) Priorität: 26.05.2008 DE 102008025122
(43) Veröffentlichungstag der Anmeldung: 16.02.2011
(73) Patentinhaber: Volkswagen Aktiengesellschaft, 38440 Wolfsburg (DE)
(72) Erfinder: WÄLLER, Christoph, 38106 Braunschweig (DE); HEIMERMANN, Matthias, 38302 Wolfenbüttel (DE)
(74) Vertreter: Sticht, Andreas
(86) Internationale Anmeldenummer: PCT/EP2009/002868
(87) Internationale Veröffentlichungsnummer: WO 2009/143941

(56) Entgegenhaltungen:
- EP-A1- 1 349 052
- WO-A1-2006/054207
- WO-A1-2007/097414
- WO-A1-2009/010114
- DE-A1-102005 035 111
- JP-A- 5 165 403
- US-A- 5 731 979

## Beschreibung

Die vorliegende Erfindung betrifft ein Anzeigeverfahren für ein Anzeigesystem und ein entsprechendes Anzeigesystem sowie insbesondere ein Bedienverfahren für ein Navigationssystem eines Fahrzeugs.

In diesem Zusammenhang offenbart die US 5,731,979 A eine Vorrichtung zur Karteninformationsdarstellung für ein Fahrzeug. Gemäß einer Ausführungsform wird auf einer Navigationsvorrichtung ein Kartenbild angezeigt, dessen Mitte konstant die aktuelle Fahrzeugposition anzeigt. Wenn der Benutzer die Mitte des Bildschirms berührt, wird zusätzlich ein Fenster auf dem Bildschirm angezeigt. Beispielsweise wird in einem Basisbereich des Bildschirms ein Kartenbild mit einem Maßstab von 1:12500 angezeigt und in dem Fenster ein Kartenbild mit einem Maßstab von 1:25000 angezeigt. Alternativ wird, wenn der Benutzer einen Teil der berührungssensitiven Oberfläche außerhalb der Mitte der Anzeige berührt, das Kartenbild in einer derartigen Art und Weise verschoben, dass der Punkt auf dem Kartenbild, welcher dem berührten Teil auf der berührungssensitiven Oberfläche entspricht, konstant in der Mitte des Bildschirms angezeigt wird.

Die JP 05 165403 A betrifft eine Navigationsvorrichtung mit einem Positionserfassungsmittel, einem Anzeigemittel, einem Anzeigesteuermittel, einem Scroll-Schalter, einem Funktionsschalter, einem Zeitgeber und einem Funktionssteuermittel. Das Funktionssteuermittel schaltet das Auslesen eines Befehls von dem Scroll-Schalter auf eine Kartenbewegung oder auf eine Bewegung der Position des eigenen Fahrzeugs. Weiterhin wird mit Hilfe des Zeitgebers die abgelaufene Zeit, für die der Scroll-Schalter nicht betätigt wurde, gemessen und die Funktion des Scroll-Schalters als eine Kartenbewegungsfunktion ausgelesen, nachdem eine vorbestimmte Zeit abgelaufen ist.

Die DE 10 2005 035 111 A1 betrifft ein Bedien- und Anzeigesystem für ein Fahrzeug mit einer zentral angeordneten optischen Anzeigeeinheit, welche gleichzeitig zwei unterschiedliche Bildausgaben für unterschiedliche Betrachtungswinkelbereiche darstellt. Weiterhin sind ein zentral angeordnetes Bedienelement und eine Detektoreinheit vorhanden. Die Detektoreinheit detektiert eine Annäherung an das zentrale Bedienelement und eine Betätigungshandlung des zentralen Bedienelements und ordnet die erkannte Betätigungshandlung einem ersten Betrachtungswinkelbereich oder einem zweiten Betrachtungswinkelbereich zu. Aufgrund der Zuordnung der erkannten Betätigungshandlung zu einem der Betrachtungswinkelbereiche wird eine zugehörige Bedieneinstellung für eine entsprechende Applikation, welche der Bildausgabe des betroffenen Betrachtungswinkelbereichs zugeordnet ist, vorgenommen.

Die WO 2009/010114 A1 offenbart ein Anzeige- und Bediensystem für ein Kraftfahrzeug, welches eine Multi-View-Anzeigevorrichtung, mittels der zeitgleich mindestens zwei unterschiedliche Darstellungen für eine Betrachtung aus unterschiedlichen Betrachtungswinkelbereichen anzeigbar sind, eine Bedienvorrichtung zum Erfassen von Benutzereingaben und eine Detektionseinheit, die eine Annäherung eines Betätigungselements an die Bedienvorrichtung detektiert und das Betätigungselement einem der Betrachtungswinkelbereiche zuordnet, umfasst. Eine mittels der Bedienvorrichtung erfasste Betätigungshandhabung des Betätigungselements ist dadurch einem der mindestens zwei unterschiedlichen Betrachtungswinkelbereiche zuordenbar.

Die WO 2007/097414 A1 betrifft eine Betriebseingabevorrichtung, welche eine Mehrfachbildschirmanzeigevorrichtung wie z.B. eine Flüssigkristallanzeigevorrichtung aufweist, welche eine Anzeige mit zwei Bildschirmen in einer rechts/links- oder oben/unten-Richtung ermöglicht. Zusätzlich ist eine berührungssensitive Oberfläche in einem Anzeigebereich der Mehrfachbildschirmanzeigevorrichtung vorgesehen. Weiterhin ist eine Näherungssensoreinheit um die berührungssensitive Oberfläche vorgesehen. Die Näherungssensoreinheit kann aus mehreren Näherungssensoren gebildet sein. Die Näherungssensoren erfassen Finger eines Benutzers, welche sich der berührungssensitiven Oberfläche für eine Betätigungseingabe nähern und eine Annäherungsrichtung. Eine Steuereinheit limitiert eine Betriebseingabe aus einer Richtung, welche unterschiedlich zu der erfassten Richtung ist. Beispielsweise deaktiviert die Steuereinheit die Betätigungseingabe von der linken Richtung und löscht das Eingabesymbol, welches in der linken Richtung auf dem Bildschirm angezeigt wird, wenn eine Annäherung des Eingabebetätigungsobjekts von der rechten Richtung erfasst wird.

Bei Navigationssystemen in Fahrzeugen, wie z.B. Personenkraftwagen oder Lastkraftwagen, werden Kartendarstellungen einer Umgebung des Fahrzeugs auf einem Anzeigesystem im Fahrzeug angezeigt. Die Kartendarstellung umfasst Straßen in der Umgebung des Fahrzeugs, eine symbolische Darstellung des Fahrzeugs sowie seine Position und Ausrichtung und weitere sogenannte Points of Interest (POI), welche für den Fahrer des Fahrzeugs interessante Einrichtungen oder Positionen auf der Karte markieren, wie z.B. Hotels, Tankstellen, Restaurants, Mautstationen usw. Während der Fahrt des Fahrzeugs wird die Kartendarstellung hierbei üblicherweise derart verändert, dass sich die Position des eigenen Fahrzeugs trotz veränderlicher geografischer Position stets an der gleichen Position des Anzeigesystems befindet und die übrigen Objekte der Kartendarstellung, wie z.B. die Straßen und die POIs ihre Lage auf dem Anzeigesystem entsprechend verändern. Dies gewährleistet eine einfache Orientierung des Fahrers mit Hilfe der Kartendarstellung.

Die auf der Kartendarstellung dargestellten Objekte, wie z.B. POIs oder Straßen, können weitere Informationen oder Funktionalitäten bereitstellen, welche bei Bedarf von einem Benutzer des Systems abgerufen oder betätigt werden können. So kann beispielsweise ein POI, welcher ein Hotel darstellt, weitergehende Informationen beispielsweise bezüglich der Zimmerpreise, Zimmerausstattung und Verfügbarkeit der Zimmer bereitstellen oder eine Funktionalität zum Aufbau einer Telefonverbindung mit dem Hotel oder eine Funktionalität zum Programmieren der Adresse des Hotels als Zieladresse des Navigationssystems bereitstellen.

Eine Interaktion zwischen einem Benutzer des Navigationssystems und der Kartendarstellung des Navigationssystems kann beispielsweise über einen berührungssensitiven Bildschirm, einen sogenannten Touchscreen, des Navigationssystems erfolgen. Um zusätzliche Informationen oder Funktionalitäten eines auf der Kartendarstellung dargestellten Objekts aufzurufen ist dann lediglich eine Berührung des Objekts auf der Kartendarstellung beispielsweise mit dem Finger erforderlich. Da sich während der Fahrt des Fahrzeugs die Objekte oder POIs auf der Kartendarstellung wie zuvor beschrieben bewegen, wird eine erhöhte Herausforderung an die Auge-Hand-Koordination des Bedieners gestellt, um diese beweglichen Ziele zu treffen. Insbesondere bei einer Bedienung des Systems durch den Fahrer des Fahrzeugs treten so vermehrt Fehltreffer auf und die Blickdauer auf das Anzeigesystem wird erhöht, wodurch der Fahrer des Fahrzeugs von den Geschehnissen im Straßenverkehr abgelenkt wird. Darüber hinaus können sich diese beweglichen Objekte aus dem Anzeigebereich des Anzeigesystems hinaus bewegen, bevor der Fahrer oder die Bedienperson das Ziel auswählen konnte.

Ähnliche Probleme bestehen nicht nur bei der oben dargestellten Kartendarstellungen auf einem Navigationssystem, sondern auch bei einer Vielzahl von Anwendungen im Fahrzeug mit sogenannten animierten Darstellungen, welche sich in Abhängigkeit einer Bewegung des Fahrzeugs oder in Abhängigkeit von über der Zeit veränderlichen Informationen verändern.

Aufgabe der vorliegenden Erfindung ist es daher, ein Anzeige- und Bedienverfahren für ein Anzeigesystem bereitzustellen, welches die zuvor beschriebenen Probleme bei der Auswahl von Objekten einer grafischen Darstellung vermeidet, d.h. eine höhere Trefferwahrscheinlichkeit sicherstellt und gleichzeitig dazu beiträgt, die Blickdauer des Fahrers auf das Anzeigesystem zu verringern, um dadurch die Ablenkung vom Straßenverkehr zu verringern und die Verkehrssicherheit zu erhöhen.

Diese Aufgabe wird erfindungsgemäß durch ein Anzeigeverfahren für ein Anzeigesystem nach Anspruch 1 und ein Anzeigesystem nach Anspruch 6 gelöst. Die abhängigen Ansprüche definieren bevorzugte und vorteilhafte Ausführungsformen der Erfindung.

Erfindungsgemäß wird ein Anzeigeverfahren für ein Anzeigesystem bereitgestellt. Das Anzeigesystem umfasst eine Anzeige zur grafischen Darstellung veränderlicher Informationen und eine Bedieneinheit zum Steuern der dargestellten Informationen durch einen Benutzer. Die Bedieneinheit kann beispielsweise eine berührungssensitive Oberfläche, einen sogenannten Touchscreen, der Anzeige umfassen. Das Anzeigeverfahren umfasst ein Erfassen einer Annäherung des Benutzers an die Bedieneinheit und ein Verändern der grafischen Darstellung in Abhängigkeit von der erfassten Annäherung an die Bedieneinheit. Das Verändern der grafischen Darstellung erfolgt derart, dass eine zeitliche Anzeigeänderung der grafischen Darstellung verringert wird. Ein Verringern der zeitlichen Anzeigeänderung der grafischen Darstellung bedeutet beispielsweise, dass ein möglichst großer Teil der grafischen Darstellung auf dem Anzeigesystem über der Zeit unverändert dargestellt wird. Durch eine derart veränderte grafische Darstellung wird einerseits dem Benutzer ermöglicht, sich nach einem kurzen Abwenden von dem Anzeigesystem, um beispielsweise auf die vor ihm liegende Straße zu schauen, wieder schnell in der grafischen Darstellung auf dem Anzeigesystem zu orientieren, da nur geringe Änderungen in der grafischen Darstellung in der Zwischenzeit stattgefunden haben. Darüber hinaus wird es einem Benutzer erleichtert bewegliche Zeile auf der grafischen Darstellung zu treffen, welche sich nun aufgrund der verringerten Anzeigeänderung nur noch langsam oder gar nicht mehr bewegen.

Die Annäherung des Benutzers an die Oberfläche der Anzeige kann beispielsweise mit Hilfe eines Annäherungssensors erfasst werden. Dadurch kann die zeitliche Anzeigeänderung der grafischen Darstellung bereits verringert werden, bevor der Benutzer die Bedieneinheit tatsächlich berührt, so dass bereits vor einem Steuern oder Auswählen der dargestellten Informationen die zeitliche Anzeigeänderung der grafischen Darstellung verringert werden kann.

Gemäß einer Ausführungsform der vorliegenden Erfindung kann das Anzeigesystem ein Anzeigesystem eines Navigationssystems eines Fahrzeugs umfassen. Die veränderlichen Informationen umfassen in diesem Fall eine Darstellung einer Landkarte einer Umgebung des Fahrzeugs und die Position des Fahrzeugs auf der Landkarte. Wenn nun keine Annäherung des Benutzers an die Bedieneinheit erfasst wird, wird das Fahrzeug an einer vorbestimmten Stelle auf der Anzeige dargestellt und die Anzeigeänderung umfasst die Änderung der Darstellung der Landkarte in Abhängigkeit einer Bewegung des Fahrzeugs. Das Fahrzeug kann beispielsweise mittig auf der Anzeige in einer vorbestimmten Richtung dargestellt werden, so dass die Darstellung der Landkarte in Abhängigkeit der Bewegung des Fahrzeugs auf der Anzeige verschoben und gedreht angezeigt wird. Wenn eine Annäherung des Benutzers unterhalb einer vorbestimmten Distanz an die Bedieneinheit erfasst wird, wird die Landkarte unverändert auf der Anzeige dargestellt und stattdessen das Fahrzeug in Abhängigkeit einer Bewegung des Fahrzeugs veränderlich auf der Anzeige dargestellt. Dadurch bleiben Objekte der Kartendarstellung, wie z.B. ein Hotel oder ein Restaurant, bei Annäherung des Benutzers zusammen mit der Kartendarstellung unbeweglich auf der Anzeige, so dass eine einfache Auswahl dieser Objekte ermöglicht wird. Darüber hinaus ist die Position des eigenen Fahrzeugs weiterhin mit Hilfe des Anzeigesystems ersichtlich.

Darüber hinaus kann das Anzeigesystem auch ein beliebiges weiteres Anzeigesystem eines Fahrzeugs umfassen, welches eine sogenannte animierte grafische Darstellung umfasst, in welcher ein Objekt der grafischen Darstellung über die Bedieneinheit von einem Benutzer ausgewählt werden kann, um beispielsweise weitere Funktionalitäten des Objekts aufzurufen. Die animierte grafische Darstellung kann sich beispielsweise in Abhängigkeit einer Bewegung des Fahrzeugs oder in Abhängigkeit von über der Zeit veränderlichen Informationen ändern.

Gemäß einer weiteren Ausführungsform kann die Anzeigeänderung die Darstellung der Landkarte in Abhängigkeit einer Bewegung des Fahrzeugs und die Darstellung des Fahrzeugs in Abhängigkeit einer Bewegung des Fahrzeugs umfassen, wenn eine Annäherung des Benutzers oberhalb der vorbestimmten Distanz und unterhalb einer weiteren vorbestimmten Distanz an die Bedieneinheit erfasst wird. In diesem Fall wird bei einer Annäherung des Benutzers an die Bedieneinheit oberhalb der vorbestimmten Distanz bereits die Anzeigeänderung der Darstellung der Landkarte verringert, so dass ein Erfassen der Informationen der Landkarte, wie z.B. ein Straßenverlauf oder eine Position eines Hotels oder Restaurants, vereinfacht wird, da sich die Landkarte nun langsamer auf der Anzeige bewegt. Um die aktuelle Position des Fahrzeugs weiterhin korrekt darzustellen, wird die Position des Fahrzeugs ebenfalls auf der Anzeige verändert.

Gemäß der vorliegenden Erfindung wird ferner ein Bedienverfahren für ein Navigationssystem eines Fahrzeugs bereitgestellt. Das Bedienverfahren umfasst das zuvor dargestellte Anzeigeverfahren, um die grafische Darstellung in Abhängigkeit von einer erfassten Annäherung des Benutzers an die Bedieneinheit zu verändern. Das Navigationssystem umfasst eine Anzeige zur grafischen Darstellung veränderlicher Informationen und eine Bedieneinheit zum Steuern der dargestellten Informationen durch einen Benutzer. Die veränderlichen Informationen umfassen eine Landkarte einer Umgebung des Fahrzeugs und die Position des Fahrzeugs auf dieser Landkarte. Das Bedienverfahren umfasst ein Auswählen eines Darstellungsmodus mittels der Bedieneinheit. Als Darstellungsmodus kann ein Normalmodus oder ein Pausenmodus ausgewählt werden. Im Normalmodus wird das Fahrzeug an einer vorbestimmten Stelle auf der Anzeige dargestellt und die Landkarte in Abhängigkeit einer Bewegung des Fahrzeugs veränderlich auf der Anzeige dargestellt. Im Pausenmodus wird hingegen die Landkarte unverändert auf der Anzeige dargestellt und das Fahrzeug in Abhängigkeit einer Bewegung des Fahrzeugs veränderlich auf der Anzeige dargestellt.

Im Normalmodus erhält der Benutzer des Navigationssystems eine übersichtliche Darstellung der Bewegung seines Fahrzeugs entlang einer vorbestimmten Route bzw. der aktuellen Umgebung des Fahrzeugs. Indem das Fahrzeug im Normalmodus an einer vorbestimmten Stelle in einer vorbestimmten Ausrichtung auf der Anzeige dargestellt wird, wird dem Benutzer eine intuitive Darstellung der Route und der Umgebung des Fahrzeugs in Fahrtrichtung des Fahrzeugs dargestellt. Dabei bewegt und dreht sich die Landkarte in Abhängigkeit der Bewegung des Fahrzeugs auf der Anzeige. Um ein Objekt, wie z.B. ein Hotel oder ein Restaurant oder einen sonstigen POI auf der Landkarte auszuwählen, kann der Benutzer in den Pausenmodus wechseln, wodurch die Darstellung der Landkarte von nun an unverändert bleibt und stattdessen die Bewegung des Fahrzeugs als Veränderung der Position und Ausrichtung des Fahrzeugs auf der Anzeige dargestellt wird. Dadurch wird dem Benutzer erleichtert, ein Objekt auf der Landkarte, wie z.B. ein Hotel oder ein Restaurant, auszuwählen, um beispielsweise weitere Informationen zu diesem Objekt abzufragen oder dieses Objekt als neue Zieladresse in das Navigationssystem einzutragen.

Weiterhin umfasst das Bedienverfahren einen Rücklaufmodus, welcher die Landkarte in Abhängigkeit einer zuvor gefahrenen Bewegungsbahn des Fahrzeugs als eine Filmsequenz darstellt, und/oder einen Vorlaufmodus, welcher die Landkarte in Abhängigkeit einer geplanten Bewegungsbahn, beispielsweise einer von dem Navigationssystem berechneten Route des Fahrzeugs, als eine Filmsequenz darstellt. Durch die zusätzlichen Darstellungsmodi für einen Vorlauf bzw. einen Rücklauf wird dem Benutzer auf einfache Art und Weise ermöglicht, bereits passierte oder zukünftige Streckenabschnitte der gefahrenen bzw. geplanten Route zu betrachten, um beispielsweise im Zusammenhang mit dem Pausenmodus auf Objekte der Landkarte zuzugreifen, welche sich nicht mehr oder noch nicht im aktuellen Ausschnitt der Anzeige befinden.

Die Bedieneinheit kann beispielsweise eine berührungssensitive Oberfläche der Anzeige umfassen. Dadurch können die unterschiedlichen Darstellungsmodi, wie z.B. Normalmodus, Pausenmodus usw., mit Hilfe von vorbestimmten Bereichen der berührungssensitiven Oberfläche der Anzeige durch Berühren dieser vorbestimmten Bereiche ausgewählt werden. Darüber hinaus ist über die berührungssensitive Oberfläche der Anzeige auch ein Zugriff auf die Objekte der Landkarte möglich.

Schließlich wird gemäß der vorliegenden Erfindung ein Anzeigesystem bereitgestellt, welches eine Anzeige zur grafischen Darstellung veränderlicher Informationen, eine Bedieneinheit zum Steuern der dargestellten Informationen durch einen Benutzer, ein Annäherungssensor zur Erfassung einer Annäherung des Benutzers an die Bedieneinheit und eine Steuereinheit umfasst. Die Steuereinheit ist mit der Anzeige, der Bedieneinheit und dem Annäherungssensor gekoppelt. Die Steuereinheit ist derart ausgestaltet, dass sie in Abhängigkeit einer Annäherung des Benutzers an die Bedieneinheit die Darstellung der veränderlichen Informationen derart ändert, dass eine zeitliche Anzeigeänderung der grafischen Darstellung der veränderlichen Informationen verringert wird. Darüber hinaus kann das Anzeigesystem zur Durchführung des oben beschriebenen Verfahrens ausgestaltet sein und umfasst daher ebenfalls die zuvor beschriebenen Vorteile.

Die vorliegende Erfindung wird nachfolgend unter Bezugnahme auf die Zeichnungen anhand bevorzugter Ausführungsformen erläutert.
Fig. 1 zeigt ein Anzeigesystem gemäß der vorliegenden Erfindung, welches eine Landkarte und eine Position eines Fahrzeugs auf der Landkarte darstellt.
Fig. 2 zeigt das Anzeigesystem der Fig. 1 mit einer in Abhängigkeit einer Bewegung des Fahrzeugs veränderten Darstellung der Landkarte.
Fig. 3 zeigt das Anzeigesystem der Fig. 2 mit einer in Abhängigkeit einer Bewegung des Fahrzeugs veränderten Darstellung des Fahrzeugs auf der Landkarte.
Fig. 4 zeigt das Anzeigesystem der Fig. 1 mit zusätzlichen Bedienelementen zum Einstellen eines Darstellungsmodus.

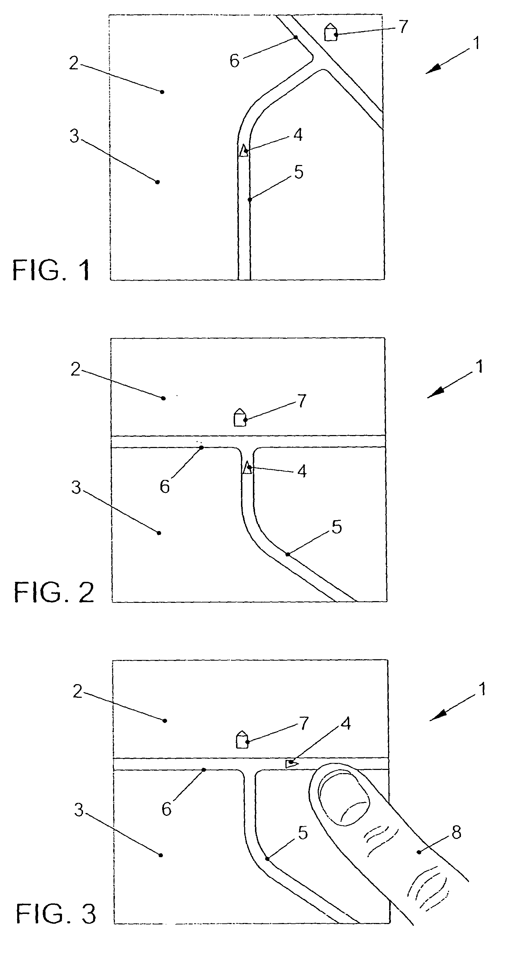

Fig. 1 zeigt ein Anzeigesystem 1, welches eine Anzeige 2 und ein Bedieneinheit 3 in Form einer berührungssensitiven Oberfläche der Anzeige 2 umfasst. Darüber hinaus umfasst das Anzeigesystem 1 einen (nicht dargestellten) Annäherungssensor, welcher ausgestaltet ist, eine Annäherung von beispielsweise einem Finger eines Benutzers in die Nähe der Anzeige 2 zu erfassen. Die Anzeige 2 des Anzeigesystems 1 ist derart ausgestaltet, dass Informationen von beispielsweise einem Navigationssystem grafisch dargestellt werden können. Fig. 1 zeigt beispielsweise die Darstellung eines Ausschnitts einer Landkarte, welche zwei Straßen 5 und 6 sowie ein Gebäude 7 von besonderem Interesse, wie z.B. ein Hotel oder ein Restaurant, umfasst. Darüber hinaus ist auf der Anzeige 2 ein Symbol 4 dargestellt, welches die Position und Ausrichtung des eigenen Fahrzeugs in Bezug auf den Ausschnitt der Landkarte darstellt. Im vorliegenden Fall ist das Symbol 4 ein Pfeil, welcher die Ausrichtung des Fahrzeugs bei einer Vorwärtsfahrt in Pfeilrichtung darstellt.

Das Anzeigesystem 1 ist derart ausgestaltet, dass, wenn keine Annäherung des Benutzers an die Bedieneinheit 3 von dem Annäherungssensor erfasst wird, die Position und Ausrichtung des Fahrzeugsymbols 4 bezogen auf die Anzeige 2 unverändert bleibt, d.h., das Fahrzeugsymbol 4 ist im Wesentlichen in der Mitte der Anzeige 2 angeordnet und weist mit seiner Pfeilspitze in Fig. 1 nach oben. Bei einer Bewegung des Fahrzeugs wird die grafische Darstellung auf der Anzeige 2 dahingehend verändert, dass der Kartenausschnitt entsprechend der Fahrzeugbewegung gedreht und/oder verschoben wird, so dass das Fahrzeugsymbol 4 unverändert angeordnet und ausgerichtet bleibt.

Fig. 2 zeigt die grafische Darstellung des Anzeigesystems 1 der Fig. 1 nachdem sich das Fahrzeug entlang der Straße 5 in Richtung der Straße 6 bewegt hat. Der Kartenausschnitt wurde dementsprechend gedreht und verschoben, wobei die Position und Ausrichtung des Fahrzeugsymbols 4 bezüglich der Anzeige 2 unverändert ist. Die Position des Gebäudes 7 hat sich hingegen zusammen mit dem Kartenausschnitt, d.h. den Straßen 5 und 6, dementsprechend verändert.

Das Anzeigesystem 1 ist ferner derart ausgestaltet, dass es beispielsweise weitere Informationen bezüglich des Gebäudes 7 auf Anweisung eines Benutzers des Anzeigesystems 1 einholen und anzeigen kann. Dazu ist das Gebäude 7 mit Hilfe eines Zeigestifts oder eines Fingers des Benutzers auf der berührungssensitiven Bedieneinheit 3 der Anzeige 2 zu berühren. Da sich, wie im Zusammenhang mit Fig. 1 und 2 beschrieben, jedoch die Position des Gebäudes 7 während der Fahrt des Fahrzeugs auf der Anzeige 2 verändert, erfasst das Anzeigesystem 1 mit Hilfe des Annäherungssensors eine Annäherung des Bedienstifts oder des Fingers des Benutzers an die Bedieneinheit 3. Sobald eine Annäherung an die Bedieneinheit 3 erfasst wurde, wird die grafische Darstellung auf der Anzeige 2 dahingehend verändert, dass nun die Darstellung des Kartenausschnitts unverändert bleibt und sich das Fahrzeugsymbol 4 in Abhängigkeit der Bewegung des Fahrzeugs auf der Anzeige 2 bewegt und/oder dreht. Wie in Fig. 3 dargestellt, ist ein Finger 8 des Benutzers in die Nähe der Bedieneinheit 3 bewegt worden, und dementsprechend die grafische Darstellung der Landkarte, d.h. die Darstellung der Straßen 5 und 6 sowie des Gebäudes 7, gegenüber der Darstellung der Fig. 2 unverändert, obwohl sich das Fahrzeug weiter bewegt. Die Bewegung des Fahrzeugs wird über eine Änderung der Position und Ausrichtung des Fahrzeugsymbols 4 auf der Anzeige 2 weiterhin dargestellt, wie in Fig. 3 gezeigt. Ein Berühren der Darstellung des Gebäudes 7 auf der Anzeige 2 ist jetzt einfach möglich, da die Position des Gebäudes 7 auf der Anzeige 2 unveränderlich ist.

Alternativ kann bei der Annäherung des Fingers 8 an die Anzeige 2 auch die Bewegungsgeschwindigkeit der Darstellung des Kartenausschnitts in Abhängigkeit der Entfernung des Fingers 8 von der Anzeige 2 verringert werden und gleichzeitig die. Position des Fahrzeugsymbols 4 in Abhängigkeit von der Fahrzeugposition auf der Anzeige 2 veränderlich dargestellt werden. Wird eine Mindestentfernung zwischen dem Finger 8 und der Anzeige 2 unterschritten, so wird, wie im Zusammenhang mit Fig. 3 beschrieben, der Kartenausschnitt unverändert dargestellt und nur noch das Fahrzeugsymbol 4 auf der Anzeige 2 bewegt.

Wird der Finger 8 oder eine entsprechende Zeigevorrichtung von der Anzeige 2 entfernt, so wird der Kartenausschnitt wieder wie in Fig. 1 und 2 beschrieben derart dargestellt, dass sich das Fahrzeugsymbol wiederum mittig in der Anzeige 2 befindet und nach oben ausgerichtet ist. Alternativ kann auch von der Darstellungsart der Fig. 3 wieder die Darstellungsart der Fig. 1 oder 2 eingenommen werden, wenn eine Bediensequenz, z.B. das Auswählen des Gebäudes 7 für eine Informationsabfrage oder als Ziel für eine Routenberechnung des Navigationssystems, abgeschlossen wurde. Alternativ kann zwischen den zuvor beschriebenen Darstellungsarten des Kartenausschnitts und des Fahrzeugsymbols mit Hilfe von Bedienelementen der Bedieneinheit 3 umgeschaltet werden, wobei diese Bedienelemente beispielsweise als berührungssensitive Flächen der Anzeige 2 ausgebildet sind.

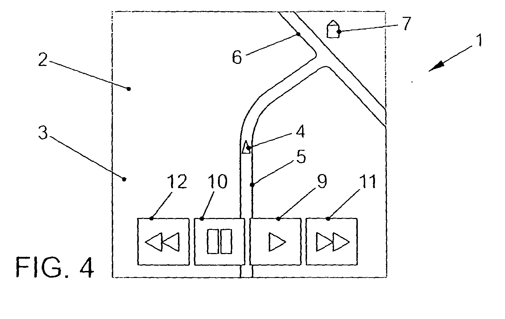

Fig. 4 zeigt ein Anzeigesystem 1, bei welchem auf der berührungssensitiven Bedieneinheit 3 mit Hilfe der Anzeige 2 Bedienelemente 9-12 realisiert sind. Nach Betätigen des Bedienelements 9 wird das Anzeigesystem 1 in eine Anzeigebetriebsart geschaltet, welche auch als Normalmodus bezeichnet wird und der im Zusammenhang mit Fig. 1 beschriebenen Anzeigebetriebsart entspricht. In diesem Normalmodus ist die Ausrichtung und Position des Fahrzeugsymbols 4 innerhalb der Anzeige 2 unveränderlich und der Kartenausschnitt wird entsprechend der Bewegung des Fahrzeugs angepasst. Durch Betätigen des Bedienelements 10 kann das Anzeigesystem 1 in einen sogenannten Pausenmodus umgeschaltet werden, welcher im Wesentlichen der im Zusammenhang mit Fig. 2 beschriebenen Darstellungsart entspricht. Der Kartenausschnitt, welcher auf der Anzeige 2 dargestellt wird, bleibt im Pausenmodus unverändert und die Position und Ausrichtung des Fahrzeugsymbols 4 ändert sich entsprechend der Bewegung des Fahrzeugs.

Die in Fig. 4 gezeigte Ausführungsform umfasst zwei weitere Bedienelemente 11 und 12, welche zum Einstellen von zwei weiteren Darstellungsmodi des Anzeigesystems 1 dienen. Durch Betätigen des Bedienelements 11 wird ein sogenannter Vorlaufmodus eingestellt. In diesem Modus wird eine zukünftige Bewegung des Fahrzeugs auf der Anzeige 2 im Zeitraffer gemäß einer beispielsweise mit Hilfe eines Navigationssystems geplanten Route dargestellt. Die Darstellung erfolgt ähnlich wie im Zusammenhang mit Fig. 1 beschrieben, d.h. die Position des Fahrzeugsymbols 4 ist unveränderlich im Wesentlichen in der Mitte der Anzeige 2 und der auf der Anzeige 2 dargestellte Kartenausschnitt, welcher beispielsweise die Straßen 5, 6 und das Gebäude 7 umfasst, bewegt sich gemäß der geplanten Bewegung des Fahrzeugs im Zeitraffer.

Weitere Bedienelemente zum Einstellen der Zeitraffergeschwindigkeit können auf der Bedieneinheit 3 vorgesehen sein. Beispielsweise kann eine Zeitleiste vorgesehen sein, welche Einstellmittel zum genauen chronologischen Auswählen eines Kartenausschnitts bereitstellt. Mit Hilfe des Bedienelements 12 kann das Anzeigesystem in einen sogenannten Rücklaufmodus eingestellt werden. In diesem Rücklaufmodus wird eine in der Vergangenheit gefahrene Strecke des Fahrzeugs im Zeitraffer auf der Anzeige 2 vergleichbar zu dem Vorlaufmodus dargestellt. Durch Betätigen des Bedienelements 10 während des Vorlaufmodus oder des Rücklaufmodus kann der jeweilige Modus angehalten werden, so dass zu diesem Zeitpunkt dargestellte Objekte auf der Karte ausgewählt oder betätigt werden können, wie beispielsweise das in Figur dargestellte Gebäude 7.

## Patentansprüche

1. Anzeigeverfahren für ein Anzeigesystem (1),
wobei das Anzeigesystem (1) eine Anzeige (2) zur grafischen Darstellung veränderlicher Informationen und eine Bedieneinheit (3) zum Steuern der dargestellten Informationen durch einen Benutzer (8) umfasst, umfassend: Erfassen einer Annäherung des Benutzers (8) an die Bedieneinheit (3), und **gekennzeichnet durch** Verändern der grafischen Darstellung in Abhängigkeit von der erfassten Annäherung derart, dass eine zeitliche Anzeigeänderung der grafischen Darstellung verringert wird.

2. Anzeigeverfahren nach Anspruch 1, **dadurch gekennzeichnet,**
**dass** die Bedieneinheit (3) eine berührungssensitive Oberfläche der Anzeige (2) umfasst, und
**dass** die Annäherung des Benutzers (8) an die Oberfläche der Anzeige (2) mit Hilfe eines Annäherungssensors erfasst wird.

3. Anzeigeverfahren nach Anspruch 1 oder Anspruch 2, **dadurch gekennzeichnet, dass** das Anzeigesystem (1) ein Anzeigesystem eines Navigationssystems eines Fahrzeugs umfasst, wobei die veränderlichen Informationen eine Darstellung einer Landkarte (5-7) einer Umgebung des Fahrzeugs und die Position (4) des Fahrzeugs auf der Landkarte (5-7) umfassen,
wobei, wenn keine Annäherung des Benutzers (8) an die Bedieneinheit (3) erfasst wird, das Fahrzeug an einer vorbestimmten Stelle auf der Anzeige dargestellt wird und die Anzeigeänderung die Darstellung der Landkarte (5-7) in Abhängigkeit einer Bewegung des Fahrzeugs umfasst, und
wobei, wenn eine Annäherung des Benutzers (8) unterhalb einer vorbestimmten Distanz an die Bedieneinheit (3) erfasst wird, die Landkarte (5-7) unverändert auf der Anzeige (2) dargestellt wird und die Anzeigeänderung die Darstellung des Fahrzeugs in Abhängigkeit einer Bewegung des Fahrzeugs umfasst.

4. Anzeigeverfahren nach Anspruch 3, **dadurch gekennzeichnet,**
**dass**, wenn eine Annäherung des Benutzers (8) oberhalb der vorbestimmten Distanz und unterhalb einer weiteren vorbestimmten Distanz an die Bedieneinheit (3) erfasst wird, die Anzeigeänderung die Darstellung der Landkarte (5-7) in Abhängigkeit einer Bewegung des Fahrzeugs und die Darstellung des Fahrzeugs in Abhängigkeit einer Bewegung des Fahrzeugs umfasst.

5. Anzeigeverfahren nach einem der Ansprüche 1-4, ferner umfassend ein Bedienverfahren für ein Navigationssystem eines Fahrzeugs,
wobei das Navigationssystem (1) eine Anzeige (2) zur grafischen Darstellung veränderlicher Informationen und eine Bedieneinheit (3) zum Steuern der dargestellten Informationen durch einen Benutzer (8) umfasst,
wobei die veränderlichen Informationen eine Darstellung einer Landkarte (5-7) einer Umgebung des Fahrzeugs und die Position (4) des Fahrzeugs auf der Landkarte (5-7) umfassen,
wobei das Bedienverfahren umfasst:
Auswählen eines Darstellungsmodus mittels der Bedieneinheit aus einer Gruppe von Darstellungsmodi, welche einen Normalmodus und einen Pausenmodus umfasst,
wobei im Normalmodus die Position (4) des Fahrzeugs an einer vorbestimmten Stelle auf der Anzeige (2) dargestellt wird und die Landkarte (5-7) in Abhängigkeit einer Bewegung des Fahrzeugs veränderlich auf der Anzeige (2) dargestellt wird, und
wobei im Pausenmodus die Landkarte (5-7) unverändert auf der Anzeige (2) dargestellt wird und die Position (4) des Fahrzeugs in Abhängigkeit einer Bewegung des Fahrzeugs veränderlich auf der Anzeige (2) dargestellt wird,
wobei die Gruppe der Darstellungsmodi ferner einen Rücklaufmodus und/oder einen Vorlaufmodus umfasst,
wobei im Rücklaufmodus die Landkarte (5-7) in Abhängigkeit einer zuvor gefahrenen Bewegungsbahn des Fahrzeugs als eine Filmsequenz dargestellt wird, und
wobei im Vorlaufmodus die Landkarte (5-7) in Abhängigkeit einer geplanten Bewegungsbahn des Fahrzeugs als eine Filmsequenz dargestellt wird.

6. Anzeigesystem umfassend:
eine Anzeige (2) zur grafischen Darstellung veränderlicher Informationen,
eine Bedieneinheit (3) zum Steuern der dargestellten Informationen durch einen Benutzer,
einen Annäherungssensor, welcher zur Erfassung einer Annäherung des Benutzers (8) an die Bedieneinheit (3) ausgestaltet ist, und
eine Steuereinheit, welche mit der Anzeige (2), der Bedieneinheit (3) und dem Annäherungssensor gekoppelt ist, **dadurch gekennzeichnet, dass** die Steuereinheit derart ausgestaltet ist,
dass sie in Abhängigkeit einer Annäherung des Benutzers (8) an die Bedieneinheit (3) die Darstellung der veränderlichen Informationen derart ändert, dass eine zeitliche Anzeigeänderung der grafischen Darstellung der veränderlichen Informationen verringert wird.

7. Anzeigesystem nach Anspruch 6, **dadurch gekennzeichnet,**
**dass** das Anzeigesystem (1) zur Durchführung des Verfahrens nach einem der Ansprüche 1-5 ausgestaltet ist.

## Claims

1. Display method for a display system (1),
wherein the display system (1) comprises a display (2) for the graphical representation of variable information and an operator control unit (3) for control of the represented information by a user (8),
comprising:
sensing of an approach by the user (8) to the operator control unit (3),
and **characterized by**
alteration of the graphical representation on the basis of the sensed approach such that a change in the display of the graphical representation over time is decreased.

2. Display method according to Claim 1, **characterized in that** the operator control unit (3) comprises a touch-sensitive surface of the display (2) and
**in that** the approach by the user (8) to the surface of the display (2) is sensed by means of a proximity sensor.

3. Display method according to Claim 1 or Claim 2, **characterized**
**in that** the display system (1) comprises a display system of a navigation system in a vehicle, wherein the variable information comprises a representation of a map (5-7) of the surroundings of the vehicle and the position (4) of the vehicle on the map (5-7),
wherein, when an approach by the user (8) to the operator control unit (3) is not sensed, the vehicle is represented at a predetermined location on the display and the change in the display comprises the representation of the map (5-7) on the basis of a motion of the vehicle, and
wherein, when an approach by the user (8) to the operator control unit (3) within a predetermined distance is sensed, the map (5-7) is represented on the display (2) without alteration and the change in the display comprises the representation of the vehicle on the basis of a motion of the vehicle.

4. Display method according to Claim 3, **characterized in that**, when an approach by the user (8) to the operator control unit (3) outside the predetermined distance and within a further predetermined distance is sensed, the change in the display comprises the representation of the map (5-7) on the basis of a motion of the vehicle and the representation of the vehicle on the basis of a motion of the vehicle.

5. Display method according to one of Claims 1 to 4, additionally comprising an operator control method for a navigation system in a vehicle,
wherein the navigation system (1) comprises a display (2) for the graphical representation of variable information and an operator control unit (3) for control of the represented information by a user (8),
wherein the variable information comprises a representation of a map (5-7) of the surroundings of the vehicle and the position (4) of the vehicle on the map (5-7),
wherein the operator control method comprises:
selection of a representation mode by means of the operator control unit from a group of representation modes that comprises a normal mode and a pause mode,
wherein, in normal mode, the position (4) of the vehicle is represented at a predetermined location on the display (2) and the map (5-7) is represented variably on the display (2) on the basis of a motion of the vehicle, and
wherein, in pause mode, the map (5-7) is represented without alteration on the display (2) and the position (4) of the vehicle is represented variably on the display (2) on the basis of a motion of the vehicle,
wherein the group of representation modes additionally comprises a rewind mode and/or a fast forward mode,
wherein, in rewind mode, the map (5-7) is represented as a film sequence on the basis of a previously travelled path of motion of the vehicle, and
wherein, in fast forward mode, the map (5-7) is represented as a film sequence on the basis of a planned path of motion of the vehicle.

6. Display system comprising:
a display (2) for the graphical representation of variable information,
an operator control unit (3) for control of the represented information by a user,
a proximity sensor that is designed to sense an approach by the user (8) to the operator control unit (3), and
a control unit that is coupled to the display (2), to the operator control unit (3) and to the proximity sensor, **characterized in that** the control unit is designed such
that it changes the representation of the variable information on the basis of an approach by the user (8) to the operator control unit (3) such that a change in the display of the graphical representation of the variable information over time is decreased.

7. Display system according to Claim 6, **characterized in that** the display system (1) is designed to perform the method according to one of Claims 1-5.

## Revendications

1. Procédé d'affichage destiné à un système d'affichage (1),
dans lequel le système d'affichage (1) comprend un afficheur (2) destiné à représenter graphiquement des informations variables et une unité d'affichage et de commande (3) destinée à commander les informations représentées par l'intermédiaire d'un utilisateur (8), consistant à :
détecter un rapprochement de l'utilisateur (8) de l'unité d'affichage et de commande (3), et **caractérisé par** le fait de
modifier la représentation graphique en fonction du rapprochement détecté de manière à diminuer la variation temporelle d'affichage de la représentation graphique.

2. Procédé d'affichage selon la revendication 1, **caractérisé en ce que**
l'unité d'affichage et de commande (3) comprend une surface tactile de l'afficheur (2), et
**en ce que** le rapprochement de l'utilisateur (8) de la surface de l'afficheur (2) est détecté à l'aide d'un capteur de proximité.

3. Procédé d'affichage selon la revendication 1 ou la revendication 2, **caractérisé en ce que** le système d'affichage (1) comprend un système d'affichage d'un système de navigation d'un véhicule, dans lequel les informations variables comprennent une représentation d'une carte (5-7) d'un environnement du véhicule et la position (4) du véhicule sur la carte (5-7),
dans lequel, lorsqu'aucun rapprochement de l'utilisateur (8) de l'unité d'affichage et de commande (3) est détecté, le véhicule est représenté à un emplacement prédéterminé sur l'afficheur et la variation d'affichage comprend la représentation de la carte (5-7) en fonction du déplacement du véhicule, et dans lequel, lorsqu'un rapprochement de l'utilisateur (8) à moins d'une distance prédéterminée de l'unité d'affichage et de commande (3) est détecté, la carte (5-7) est représentée inchangée sur l'afficheur (2) et la variation d'affichage comprend la représentation du véhicule en fonction d'un déplacement du véhicule.

4. Procédé d'affichage selon la revendication 3, **caractérisé en ce que**,
lorsqu'un rapprochement de l'utilisateur (8) est détecté au-delà de la distance prédéterminée et en deçà d'une autre distance prédéterminée de l'unité d'affichage et de commande (3), la variation d'affichage comprend la représentation de la carte (5-7) en fonction d'un déplacement du véhicule et la représentation du véhicule en fonction d'un déplacement du véhicule.

5. Procédé d'affichage selon l'une quelconque des revendications 1-4, comprenant en outre un procédé de commande destiné à un système de navigation d'un véhicule,
dans lequel le système de navigation (1) comprend un afficheur (2) destiné à représenter graphiquement des informations variables et une unité d'affichage et de commande (3) destinée à commander les informations représentées par l'intermédiaire d'un utilisateur (8), dans lequel les informations variables comprennent une représentation d'une carte (5-7) d'un environnement du véhicule et la position (4) du véhicule sur la carte (5-7),
dans lequel le procédé de commande consiste à :
sélectionner un mode de représentation au moyen de l'unité d'affichage et de commande au sein d'un groupe de modes de représentation qui comprend un mode normal et un mode de pause,
dans lequel, dans le mode normal, la position (4) du véhicule est représentée à un emplacement prédéterminé sur l'afficheur (2) et la carte (5-7) est représentée de manière variable sur l'afficheur (2) en fonction d'un déplacement du véhicule, et
dans lequel, dans le mode de pause, la carte (5-7) est représentée inchangée sur l'afficheur (2) et la position (4) du véhicule est représentée de manière variable sur l'afficheur (2) en fonction d'un déplacement du véhicule,
dans lequel le groupe des modes de représentation comprend en outre un mode de marche arrière et/ou un mode de marche avant,
dans lequel, dans le mode de marche arrière, la carte (5-7) est représentée en fonction d'un trajet de déplacement antérieurement parcouru par le véhicule sous la forme d'une séquence de film, et
dans lequel, dans le mode de marche avant, la carte (5-7) est représentée en fonction d'un trajet de déplacement prévu du véhicule sous la forme d'une séquence de film.

6. Système d'affichage comprenant :
un afficheur (2) destiné à représenter graphiquement des informations variables,
une unité d'affichage et de commande (3) destinée à commander les informations représentées par l'intermédiaire d'un utilisateur,
un capteur de proximité qui est conçu pour détecter un rapprochement d'un utilisateur (8) de l'unité d'affichage et de commande (3), et
une unité de commande qui est reliée à l'afficheur (2), à l'unité d'affichage et de commande (3) et au capteur de proximité,
**caractérisé en ce que** l'unité de commande est conçue de manière à modifier les informations variables en fonction d'un rapprochement de l'utilisateur (8) de l'unité d'affichage et de commande (3) afin de diminuer une variation temporelle d'affichage de la représentation graphique des informations variables.

7. Système d'affichage selon la revendication 6, **caractérisé en ce que**
le système d'affichage (1) est conçu pour mettre en oeuvre le procédé selon l'une quelconque des revendications 1-5.
